# EUROPÄISCHE PATENTSCHRIFT

(11) **EP 1 763 903 B1**
(45) Veröffentlichungstag und Bekanntmachung des Hinweises auf die Patenterteilung: **19.08.2015**
(21) Anmeldenummer: 05739464.5
(22) Anmeldetag: 09.04.2005
(51) Int. Cl.: H01M 8/04, H01M 8/02, H01M 8/24, H01M 8/12

(54) **BRENNSTOFFZELLEN-STACK**
FUEL CELL STACK
EMPILEMENT DE PILES A COMBUSTIBLE

(30) Priorität: 11.05.2004 DE 102004023057
(43) Veröffentlichungstag der Anmeldung: 21.03.2007
(73) Patentinhaber: Bayerische Motoren Werke Aktiengesellschaft, 80809 München (DE)
(72) Erfinder: WETZEL, Franz-Josef, 82216 Gernlinden (DE); TACHTLER, Joachim, 85737 Ismaning (DE)
(86) Internationale Anmeldenummer: PCT/EP2005/003764
(87) Internationale Veröffentlichungsnummer: WO 2005/112166

(56) Entgegenhaltungen:
- EP-A- 1 309 027
- WO-A-00/54356
- DE-A1- 10 238 859

## Beschreibung

Die Erfindung betrifft einen Brennstoffzellen-Stack mit mehreren übereinander angeordneten Einzelzellen mit elektrochemisch aktiven Schichten, deren erste Oberfläche mit von einer Seite des Stacks herangeführtem Brenngas und deren andere Oberfläche mit von einer bevorzugt anderen Seite des Stacks herangeführtem Sauerstoff beaufschlagt wird, wobei die entsprechenden Restgase auf der jeweils gegenüberliegenden Seite des Stacks gesammelt werden. Zum technischen Umfeld wird beispielshalber auf Dokumente EP 1 309 027, WO 00/54356, DE 10238859 sowie die DE 100 23 036 A1 verwiesen.

Planare Brennstoff-Einzelzellen werden bekanntlich zur Darstellung größerer Leistungseinheiten zu einem sog. Stack gestapelt und dabei elektrisch in Reihe geschaltet, wodurch sich die in den Einzelzellen realisierten Spannungszuwächse und damit die Leistungsfähigkeit der in den Einzelzellen elektrochemisch aufgeladenen Elektronen addieren. Neben elektrochemisch aktiven Einzelzellen können in bekannten Brennstoffzellen-Stacks noch sog. Druckverteiler verbaut sein, die eine optimale Verspannung der Einzelzellen im Stack sicherstellen sollen (vgl. bspw. DE 100 03 528 A1), sowie ggf. Kühleinheiten und Heizelemente, mit denen die Betriebstemperatur des Brennstoffzellen-Stacks eingehalten bzw. erreicht werden kann, wofür die eingangs genannte DE 100 23 036 A1 ein Beispiel für eine PEM-Brennstoffzelle zeigt.

Im Betrieb des Brennstoffzellen-Stacks strömen die Reaktionsgase bzw. Reaktanden, die in den Einzelzellen unter Abgabe von elektrischen Strom miteinander reagieren, und bei denen es sich bspw. um Wasserstoff und Luftsauerstoff handeln kann, über Leitungen, die üblicherweise konstruktiv in die sog. Bipolarplatten oder Interkonnektoren der Einzelzellen integriert sind, in die Kathodenräume bzw. in die Anodenräume des Brennstoffzellen-Stacks. Dabei sind diese Räume bevorzugt derart ausgeführt, dass die beiden Elektroden einer Einzelzelle sowohl über deren Fläche, als auch sämtliche Elektroden des Stacks über dessen Höhe möglichst gleichmäßig mit den besagten Reaktanden versorgt werden. Während bei einer Festoxid-Brennstoffzelle (SOFC = solid oxid fuel cell) die Kathoden der Einzelzellen mit Luftsauerstoff angeströmt werden, gelangt das sog. Brenngas zu den Anoden, und zwar üblicherweise als H₂ oder CH₄, ggf. zusätzlich CO, N₂, C0₂ und H₂0 (Reformat). Wird dann eine elektrische Last an den Stack bzw. an die Einzelzellen angelegt, so wird die Arbeitsfähigkeit der Elektronen in den Reaktionszentren der Einzellzellen auf elektrochemischem Weg erhöht, umgangssprachlich also elektrischer Strom erzeugt. Die einzelnen Zellen werden i.d.R. von den Brenngasen zeitlich und geometrisch parallel durchströmt. An den strömungstechnischen Enden der Einzelzellen werden die sog. Restgase der Anoden und der Kathoden in der Regel getrennt gesammelt und über (wiederum meist in die Bipolarplatten integrierte Kanäle) abgeführt.

Die Stromdichteverteilung über der Fläche einer Einzelzelle hängt dabei u.a. von deren elektrochemischer Aktivität, aber auch von der Temperaturverteilung, von den vorliegenden Gaskonzentrationen und vom vorliegenden Druckniveau in den Kathodenräumen bzw. Anodenräumen ab. Der Verlauf der Strom-Spannungs-Kennlinie der einzelnen Zellen eines Brennstoffzellen-Stacks ist dabei unterschiedlich. Insbesondere die Anfangszelle und Endzelle eines Zellenstapels, d.h. dessen unterste sowie dessen oberste Einzelzelle weisen oftmals schlechtere Leistungswerte auf als Brennstoff-Einzelzellen in der Mitte des Stacks bzw. Stapels. Dies wirkt sich ungünstigerweise unmittelbar auf die elektrischen Leistungskennwerte des gesamten Brennstoffzellen-Stacks aus. In der Praxis werden nämlich die Einzelzellen über die Stapelhöhe hinweg infolge unterschiedlicher Strömungswiderstände, daraus resultierenden Druckabfällen und den Fertigungstoleranzen der Bipolarplatten, verbauten Abstandhaltern, Dichtungen und Kontaktierungen ungleichmäßig durchströmt. Insbesondere am Anfang oder Ende eines Stacks kann eine Unterversorgung oder eine Übersättigung der Einzelzellen-Elektroden mit Reaktanden beobachtet werden.

Die Anfangszellen und Endzellen eines Brerinstoffzellen-Stacks, die im weiteren auch als Rand-Zellen bezeichnet werden, verlieren zudem Wärme an ein an den Stack montiertes Verteilungsmodul für Brenngas bzw. für Luftsauerstoff sowie an ein Spannsystem, mit dem die Einzelzellen zum Stack verspannt sind. Hierdurch sind somit die Anfangszelle und die Endzelle eines Brennstoffzellen-Stacks hinsichtlich ihrer elektrochemischen Aktivität, welche mit abnehmender Temperatur fällt, schlechter als Einzelzellen aus dem Mittenbereich des Stacks. Zusammen mit der bereits genannten Wirkung der nicht optimalen Versorgung dieser Rand-Zellen mit den Reaktanden sind die Anfangszelle und die Endzelle eines Brennstoffzellen-Stacks somit kälter als die übrigen Zellen, so dass die elektrische Spannung dieser Rand-Zellen bei Belastung stärker abfällt. Da die maximal mögliche elektrische Leistung des Brennstoffzellen-Stacks analog zu elektrischen Batterien durch die schwächsten Einzelzellen bestimmt bzw. begrenzt ist, ist aufgrund der genannten Einflüsse die maximale Leistungsausbeute des gesamten Stacks in der Praxis wesentlich geringer als sie bei einer homogenen Leistungsabgabe der Einzelzellen sein könnte.

Eine Abhilfemaßnahme für diese geschilderte Problematik aufzuzeigen, ist Aufgabe der vorliegenden Erfindung.

Die Lösung dieser Aufgabe ist für einen Brennstoffzellen-Stack nach dem Anspruch 1.

Vorteilhafte Aus- und Weiterbildungen sind Inhalt der Unteransprüche.

Es wird somit vorgeschlagen, an zumindest einem oder an beiden Enden eines Brennstoffzellen-Stacks zumindest eine elektrochemisch nicht aktive Zelle oder Zellstruktur einzubauen, die bei Betrieb des Stacks mit unverbrauchten Reaktanden durchströmt wird. Dadurch entsteht am Ende der Gaszuführungen zu den aktiven Einzelzellen kein solch hoher Staudruck wie ohne eine derartige Zellstruktur. Zudem wird die Temperaturverteilung der dieser Zellstruktur benachbarten aktiven Einzelzelle insbesondere im Fall von Hochtemperatur-Brennstoffzellen homogenisiert. Als Folge hiervon kann die der erfindungsgemäßen Zellstruktur benachbarte und somit bezüglich des Stacks "weiter innen" liegende Einzelzelle, die elektrochemisch aktiv ist, günstiger betrieben werden als im bekannten Stand der Technik, so dass die oben geschilderten Probleme nicht auftreten.

Die vorgeschlagenen vorzugsweise an den beiden Enden eines Brennstoffzellen-Stacks vorgesehenen und von den Reaktanden (d.h. von Brenngas bzw. von Sauerstoff) durchströmte(n), elektrochemisch nicht aktive(n) Zellstruktur(en) kann/können dabei hinsichtlich ihres strömungstechnischen Aufbaus den elektrochemisch aktiven Einzelzellen ähnlich sein. Grundsätzlich ist angestrebt, dass die den Reaktandenzufluß und Reaktandenabfluß zu/von den (diesen genannten Zellstrukturen benachbarten) elektrochemisch aktiven Einzelzellen vergleichmäßigenden Zellstrukturen so ausgelegt sind, dass die einzelnen sog. Reaktandenräume des Brennstoffzellen-Stacks, d.h. die weiter oben bereits genannten Kathodenräume bzw. Anodenräume, über der Höhe des Stacks betrachtet wesentlich gleichmäßiger durchströmt werden. Dies führt zur Vergleichmäßigung sowohl der zeitlichen, als auch der räumlichen elektrischen Leistungsabgabe über der Höhe des Brennstoffzellen-Stacks und über den Flächen der Einzelzellen. Im übrigen können die Einzelzellen sowie die hier vorgeschlagene(n) Zellstruktur(en) eines Brennstoffzellen-Stacks jeweils in Form sog. Kassetten ausgebildet sein, so wie dies in der DE 102 38 859 A1 dargestellt ist.

In einer weiteren Ausbaustufe kann oder können die elektrochemisch inaktiven Zellstruktur(en) am (jeweiligen) Ende eines erfindungsgemäßen Brennstoffzellen-Stacks so ausgeführt sein, dass jeweils zumindest ein Teilstrom von Brenngas und Luft in definiertem Umfang an einer hierin vorgesehenen katalytischen Brennerschicht so zusammengeführt werden, dass auslegungsgerechte flächige Heizquellen gebildet werden. Wie aus der eingangs genannten Schrift grundsätzlich bekannt ist, kann somit ein das Brenngas der Brennstoffzellen katalytisch verbrennendes Heizelement durch die elektrochemisch nicht aktive(n) Zellstruktur(en) gebildet werden, welche hierzu geeignet ausgebildet ist bzw. sind. Vom grundsätzlichen Aufbau her kann somit eine entsprechende, elektrochemisch nicht aktive Zellstruktur bspw. in Kassettenform (vgl. oben) ähnlich wie eine elektrochemisch aktive Einzelzelle aufgebaut sein, d.h. eine obere sowie eine untere Kammer beschreiben, die durch eine poröse, für Gase teildurchlässige Trennschicht voneinander getrennt sind, wobei bei einer entsprechenden Zellstruktur diese Trennschicht als katalytischer Brenner ausgebildet ist, so dass senkrecht zur eigentlich Durchströmungsrichtung ein definiertes Zusammenführen eines Teils der Reaktanden zur Darstellung eines katalytischen Verbrennungsvorganges zum Zwecke einer Flächenheizung erfolgt. Im Falle einer Brennstoff-Einzelzelle hingegen ist diese Trennschicht durch die Elektrodenschichten mit dem zugehörigen Substrat gebildet.

Insbesondere im Falle einer SOFC (solid oxid fuel cell - Festoxidbrennstoffzelle) ist es vorteilhaft, wenn die genannten flächigen Brenner bzw. katalytischen Heizelemente zur Unterstützung des Aufheizprozesses des Brennstoffzellen-Stacks, nämlich insbesondere zur Vergleichmäßigung der Temperaturverteilung und der thermomechanischen Spannungsverteilung sowie der daraus ggf. resultierenden Scherkräfte sowie zur Verkürzung der Aufheizphase und damit im Sinne einer kürzeren Startzeit für die Stromproduktion, bereits bei relativ niedrigen Temperaturen (bspw. ab ca. 200°C-300°C) anspringen. Hingegen kann es vorteilhaft sein, wenn die Heizleistung des somit in bzw. durch die sog. Zellstruktur gebildeten Heizelementes oder Flächenbrenners ab ca. 800°C stark abnimmt, um eine Überhitzung des Brennstoffzellen-Stapels zu vermeiden. Dies kann entweder von außen gesteuert werden oder bevorzugt durch einen selbststeuernden Prozess erfolgen, also bspw. durch eine temperaturabhängige Verkleinerung der Brennerporen selbst oder eine entsprechende Verkleinerung der Querschnitte der Zuströmkanäle oder Abströmkanale dieser Zellstrukturen bspw. infolge Wärmeausdehnung (Quellung) der Kanalwände.

Die vorgeschlagene(n), am oberen und/oder unteren Ende eines Brennstoffzellen-Stacks mit übereinander angeordneten Einzelzellen vorgesehenen Zellstrukturen können sich dabei durch einen relativ geringen Druckabfall in Durchströmungsrichtung auszeichnen, wobei bevorzugt durch einen definierten Druckabfall das Strömungsverhalten im gesamten Brennstoffzellen-Stack ausgeglichen werden kann, ohne dass die aktiven Einzellzellen hierfür individuell modifiziert werden müssten. Bevorzugt können sog. Kassetten, aus denen die Einzelzellen sowie die vorgeschlagenen Zellstrukturen gebildet werden, sowie die jeweiligen Dichtungen und elektrischen Kontaktierungen grundsätzlich Gleichteile über dem gesamten Stack sein. Dabei können bei den vorgeschlagenen Zellstrukturen im wesentlichen nur die elektrochemisch wirksamen Schichten der Einzelzellen durch einen semipermeablen katalytischen Flächenbrenner ersetzt sein.

Ein erfindungsgemäßer Stack hat im Betrieb in seinen Einzelzellen durch die Kompensation von Wärmeverlusten infolge technisch unvermeidlicher Außenkonvektion und -strahlung wesentlich gleichmäßigere elektrochemische Bedingungen. Dieser Vergleichmäßigungseffekt führt zu einer Leistungssteigerung und damit zu einer Verbesserung der Funktion. Auch wird die Lebensdauer des Stacks durch die Verringerung der thermomechanischen Spannungen erhöht, wobei durchaus eine Vielzahl von Details abweichend von obigen Erläuterungen gestaltet sein kann, ohne den Inhalt der Patentansprüche zu verlassen.

## Patentansprüche

1. Brennstoffzellen-Stack mit mehreren übereinander angeordneten Einzelzellen mit elektrochemisch aktiven Schichten, deren erste Oberfläche mit von einer Seite des Stacks herangeführtem Brenngas und deren andere Oberfläche mit von einer bevorzugt anderen Seite des Stacks herangeführtem Sauerstoff beaufschlagt wird, wobei die entsprechenden Restgase auf der jeweils gegenüberliegenden Seite des Stacks gesammelt werden **dadurch gekennzeichnet, dass** an beiden Enden des Stacks eine elektrochemisch nicht aktive Zellstruktur eingebaut ist, die bei Betrieb der Brennstoffzelle von den genannten Reaktanden durchströmt wird und hinsichtlich ihres strömungstechnischen Aufbaus den elektrochemisch aktiven Einzelzellen ähnlich ist, also eine obere sowie eine untere Kammer aufweist, die durch eine Trennschicht voneinander getrennt sind.

2. Brennstoffzellen-Stack nach Anspruch 1,
**dadurch gekennzeichnet, dass** die Trennschicht in der elektrochemisch nicht aktiven Zellstruktur in Form einer porösen, für Gase teildurchlässige und als katalytischer Brenner wirkenden Trennschicht ausgebildet ist.

3. Brennstoffzellen-Stack nach Anspruch 2,
**dadurch gekennzeichnet, dass** der Zuströmkanal oder Abströmkanal zumindest eines Reaktanden zur elektrochemisch nicht aktiven und die als katalytischer Brenner wirkende Trennschicht enthaltenden Zellstruktur oder die in deren Trennschicht vorgesehene Poren zum Austausch der Reaktanden derart gestaltet ist/sind, dass der freie Strömungs-Querschnitt mit steigender Temperatur des Brennstoffzellen-Stacks abnimmt.

## Claims

1. A fuel cell stack with a plurality of individual cells arranged one above the other, with electrochemically active layers, the first surface of which is exposed to fuel gas introduced from one side of the stack and the other surface of which is exposed to oxygen, preferably introduced from another side of the stack, the corresponding residual gases being collected on the respective opposing side of the stack, **characterised in that** an electrochemically inactive cell structure is installed at the two ends of the stack, through which said reactants flow upon operation of the fuel cell and which is similar to the electrochemically active individual cells with respect to its flow structure, in other words has an upper and a lower chamber, which are separated from one another by a separating layer.

2. A fuel cell stack according to claim 1, **characterised in that** the separating layer in the electrochemically inactive cell structure is in the form of a porous separating layer that is partially permeable to gases and acts as a catalytic burner.

3. A fuel cell stack according to claim 2, **characterised in that** the inflow channel or outflow channel of at least one reactant to the electrochemically inactive cell structure, which contains the separating layer acting as a catalytic burner, or the pores provided in the separating layer thereof for the exchange of the reactants is/are configured in such a way that the free flow cross section decreases with an increasing temperature of the fuel cell stack.

## Revendications

1. Empilement de piles à combustible comprenant plusieurs piles élémentaires situées les unes sur les autres et ayant des couches électro-chimiquement actives sur la première face desquelles est appliqué le gaz combustible amené par un côté de l'empilement et sur l'autre face desquelles est appliqué de l'oxygène amené de préférence par un autre côté de l'empilement, les gaz résiduels correspondants étant rassemblés sur la face respectivement opposée de l'empilement,
**caractérisé en ce qu'**
aux deux extrémités de l'empilement, est montée une structure cellulaire non électro-chimiquement active qui, lors du fonctionnement de la pile à combustible est traversée par les produits réactifs sus-mentionnés, et qui a une configuration similaire du point de vue de la technique des fluides à celle des piles élémentaires électro-chimiquement active et donc comporte une chambre supérieure ainsi qu'une chambre inférieure qui sont séparées par une couche de séparation.

2. Empilement de piles à combustible conforme à la revendication 1, **caractérisée en ce que**
la couche de séparation située dans la structure cellulaire non électro-chimiquement active est réalisée sous la forme d'une couche de séparation poreuse, partiellement étanche aux gaz et agissant en tant que brûleur catalytique.

3. Empilement de piles à combustible conforme à la revendication 2, **caractérisée en ce que**
le canal d'entrée ou le canal de sortie d'au moins un produit réactif dans ou de la structure cellulaire non-électro-chimiquement active et comprenant la couche de séparation agissant en tant que brûleur catalytique, ou les pores prévus dans cette couche de séparation pour permettre un échange de produits réactifs et ou sont réalisé(s) de sorte que la section d'écoulement libre diminue lorsque la température de l'empilement de piles à combustible augmente.
